# EUROPÄISCHE PATENTSCHRIFT

(11) **EP 2 757 233 B1**
(45) Veröffentlichungstag und Bekanntmachung des Hinweises auf die Patenterteilung: **18.05.2016**
(21) Anmeldenummer: 14151369.7
(22) Anmeldetag: 16.01.2014
(51) Int. Cl.: F02B 29/04, F01P 11/10, F01P 5/06

(54) **Kühlungsanordnung für ein Kraftfahrzeug**
Cooling assembly for a motor vehicle
Système de refroidissement pour un véhicule automobile

(30) Priorität: 18.01.2013 DE 102013000813
(43) Veröffentlichungstag der Anmeldung: 23.07.2014
(73) Patentinhaber: Deere & Company, Moline, IL 61265 (US)
(72) Erfinder: Stark, Waldemar, 67227 Frankenthal (DE)
(74) Vertreter: Dehnhardt, Florian Christopher

(56) Entgegenhaltungen:
- EP-A1- 0 048 667
- WO-A2-2012/135821
- GB-A- 2 326 626
- US-A1- 2007 144 463

## Beschreibung

Die Erfindung betrifft eine Kühlungsanordnung für ein Kraftfahrzeug, insbesondere für einen landwirtschaftlichen Traktor, mit einer Luftfördereinrichtung zur Erzeugung eines Kühlluftvolumenstroms sowie einem der Luftfördereinrichtung ansaugseitig mittels einer Ansaughutze vorgeschalteten luftgekühlten Motorwärmetauscher.

Derartige Kühlungsanordnungen dienen typischerweise der Kühlung von in Kraftfahrzeugen vorgesehenen Verbrennungsmotoren. Eine insofern übliche Konfiguration umfasst einen mit einem Motorblock kommunizierenden Hochtemperaturkühlkreislauf, in dem Motorkühlwasser durch einen als Hochtemperaturradiator ausgebildeten luftgekühlten Motorwärmetauscher zum Zwecke der Kühlung des Verbrennungsmotors gepumpt wird.

Handelt es sich bei dem Verbrennungsmotor um einen aufgeladenen Dieselmotor, so ist in aller Regel eine zusätzliche Kühlung der von einem Turbolader komprimierten Ladeluft mittels eines zugehörigen Ladeluftkühlers erforderlich. Aufgrund von Bauraumbeschränkungen im Motorraum des Kraftfahrzeugs erfolgt die Kühlung des Ladeluftkühlers meist baulich getrennt von derjenigen des Verbrennungsmotors (sog. verteiltes Kühlsystem). Hierzu ist der Ladeluftkühler in einem der Abströmseite des Motorwärmetauschers zugewandten Motorraumbereich angeordnet, wobei dieser unabhängig von der Erzeugung des Kühlluftvolumenstroms mittels eines elektrisch betriebenen Axialstromlüfters mit aus der Fahrzeugumgebung angesaugter Luft gekühlt wird.

Im Falle der Zunahme des durch den Motorwärmetauscher hindurchtretenden Kühlluftvolumenstroms verursacht der damit einhergehende Druckanstieg im Motorraum des Kraftfahrzeugs einen erhöhten Gegendruck im Bereich des Ladeluftkühlers, der seinerseits zu einem entsprechenden Drehzahl- und damit Leistungsabfall des elektrisch betriebenen Axialstromlüfters führen kann. Um unter derartigen Umständen eine mögliche Beeinträchtigung der Kühlung des Ladeluftkühlers zu vermeiden, ist für den Axialstromlüfter die Verwendung eines hinreichend leistungsstarken elektrischen Antriebs erforderlich. Derartige leistungsstarke elektrische Antriebe können jedoch aufgrund ihres erhöhten Platzbedarfs zu Bauraumkonflikten und unerwünschten Einschränkungen bezüglich der Wahl ihres Einbauorts im Motorraum des Kraftfahrzeugs führen.

GB2326626 A und WO2012/135821 A2 zeigen bekannte Kühlungsanordnungen für Kraftfahrzeuge.

Es ist daher Aufgabe der vorliegenden Erfindung, eine Kühlungsanordnung der eingangs genannten Art dahingehend weiterzubilden, dass eine unerwünschte Beeinträchtigung der Kühlung des Ladeluftkühlers im Falle einer Zunahme des durch den Motorwärmetauscher hindurchtretenden Kühlluftvolumenstroms vermieden wird.

Diese Aufgabe wird durch eine Kühlungsanordnung mit den Merkmalen des Patentanspruchs 1 gelöst.

Die erfindungsgemäße Kühlungsanordnung für ein Kraftfahrzeug umfasst eine Luftfördereinrichtung zur Erzeugung eines Kühlluftvolumenstroms sowie einen der Luftfördereinrichtung ansaugseitig mittels einer Ansaughutze vorgeschalteten luftgekühlten Motorwärmetauscher. Ein luftgekühlter Ladeluftkühler ist mit der Ansaughutze derart verbunden, dass sich aufgrund eines mittels der Luftfördereinrichtung in der Ansaughutze erzeugbaren Unterdrucks ein durch den Ladeluftkühler hindurchtretender Nebenkühlluftvolumenstrom hervorrufen lässt.

Da der Nebenkühlluftvolumenstrom bezüglich der Luftfördereinrichtung ansaugseitig in den Kühlluftvolumenstrom mündet, mithin eine Zunahme des Kühlluftvolumenstroms gleichfalls zu einer entsprechenden Zunahme des durch den Ladeluftkühler hindurchtretenden Nebenkühlluftvolumenstroms führt, lässt sich eine unerwünschte Beeinträchtigung der Kühlung des Ladeluftkühlers, wie sie im Falle der eingangs beschriebenen herkömmlichen Kühlungsanordnung auftritt, von vornherein ausschließen.

Ferner ist es möglich, zur Kühlung sowohl des Motorwärmetauschers wie auch des Ladeluftkühlers lediglich eine einzelne Luftfördereinrichtung vorzusehen. Bei der Luftfördereinrichtung kann es sich beispielsweise um einen seitens des Verbrennungsmotors angetriebenen Axialstromlüfter herkömmlicher Bauart handeln, der mittels eines mit dem Verbrennungsmotor in Verbindung stehenden Riementriebs in Drehung versetzt wird.

Die erfindungsgemäße Kühlungsanordnung erlaubt es, den Ladeluftkühler baulich außerhalb des Verlaufs des Kühlluftvolumenstroms, beispielsweise in einer seitlich zur Ansaughutze orientierten horizontalen Einbaulage platzsparend im Motorraum des Kraftfahrzeugs unterzubringen. Der Einbau kann beispielsweise in einem freien Bereich oberhalb des Verbrennungsmotors erfolgen.

Vorteilhafte Weiterbildungen der erfindungsgemäßen Kühlungsanordnung gehen aus den Unteransprüchen hervor.

Vorzugsweise ist der Ladeluftkühler mit der Ansaughutze über ein Anschlussstück verbunden, wobei das Anschlussstück entlang eines seitlichen Umfangsbereichs der Ansaughutze in den mittels der Luftfördereinrichtung erzeugbaren Kühlluftvolumenstrom einmündet. Das Anschlussstück weist insbesondere einen an die Außenkontur des verwendeten Ladeluftkühlers angepassten rahmenförmigen Befestigungsbereich sowie einen sich in Richtung der Ansaughutze verjüngenden Mündungsbereich auf.

Im Sinne einer Verringerung des Montageaufwands kann das Anschlussstück einstückiger Bestandteil der Ansaughutze sein. Ansaughutze und Anschlussstück können in diesem Fall aus thermoplastischem Kunststoff im Spritzgussverfahren hergestellt sein.

Alternativ ist es denkbar, dass das Anschlussstück mittels einer luftdichten Steckverbindung an der Ansaughutze angebracht ist. Ein derartiger mehrteiliger Aufbau hat den Vorteil, dass der Ladeluftkühler bereits vor seinem endgültigen Einbau ins Kraftfahrzeug bequem an dem Anschlussstück vormontiert werden kann.

Die luftdichte Steckverbindung weist insbesondere einen selbstabdichtenden Konussitz auf. Um ein unbeabsichtigtes Lösen des Konussitzes aufgrund fahrtbedingt auftretender Vibrationen des Kraftfahrzeugs zu verhindern, kann zusätzlich ein geeignetes Sicherungsmittel vorgesehen sein.

Gemäß der Erfindung ist dem Ladeluftkühler eine weitere Luftfördereinrichtung vorgeschaltet. Die weitere Luftfördereinrichtung ist als elektrisch betriebener Axialstromlüfter ausgebildet. Da der elektrisch betriebene Axialstromlüfter ausschließlich der Unterstützung der Erzeugung des Nebenkühlluftvolumenstroms dient, ist der Einsatz eines vergleichsweise leistungsschwachen elektrischen Antriebs möglich.

Bei Verwendung eines elektrisch betriebenen Axialstromlüfters lässt sich zudem ohne größeren Mehraufwand eine elektronische Ladelufttemperaturregelung verwirklichen. Hierzu umfasst die Kühlungsanordnung eine Kontrolleinheit, der die Ausgangssignale eines in einem Ladeluftvolumenstrom liegenden Temperatursensors zur Ermittlung eines Istwerts der Ladelufttemperatur zugeführt werden, wobei die Kontrolleinheit auf Grundlage eines zwischen dem ermittelten Istwert und einem für die Ladelufttemperatur einzuhaltenden Sollwert durchgeführten Vergleichs die Drehzahl des elektrisch betriebenen Axialstromlüfters im Sinne der Minimierung des Vergleichsergebnisses einregelt.

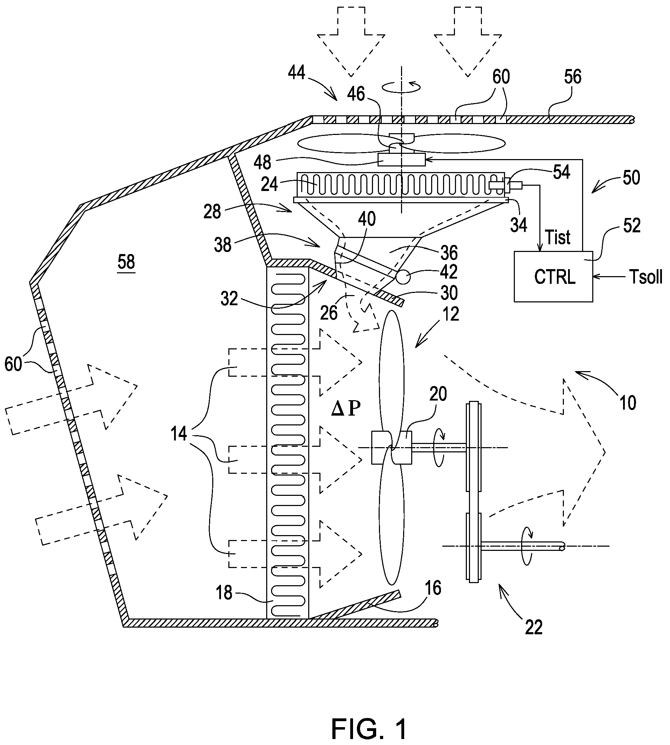

Die erfindungsgemäße Kühlungsanordnung wird im Folgenden anhand der beigefügten Zeichnung näher erläutert.

Dabei zeigt die einzige Figur ein Ausführungsbeispiel der erfindungsgemäßen Kühlungsanordnung für ein nicht dargestelltes Kraftfahrzeug. Bei dem Kraftfahrzeug handelt es sich beispielsweise um einen landwirtschaftlichen Traktor herkömmlicher Bauart, der einen als aufgeladenen Dieselmotor ausgebildeten Verbrennungsmotor aufweist, der über eine Getriebeeinheit mit angetriebenen Fahrzeugrädern in Verbindung steht.

Die Kühlungsanordnung 10 umfasst eine Luftfördereinrichtung 12 zur Erzeugung eines Kühlluftvolumenstroms 14 sowie einen der Luftfördereinrichtung 12 ansaugseitig mittels einer Ansaughutze 16 vorgeschalteten luftgekühlten Motorwärmetauscher 18. Der Motorwärmetauscher 18 ist Bestandteil eines mit einem Motorblock des Verbrennungsmotors kommunizierenden Hochtemperaturkühlkreislaufs, in dem Motorkühlwasser durch den als Hochtemperaturradiator ausgebildeten Motorwärmetauscher 18 zum Zwecke der Kühlung des Verbrennungsmotors gepumpt wird. Bei der Luftfördereinrichtung 12 handelt es sich beispielsgemäß um einen seitens des Verbrennungsmotors angetriebenen Axialstromlüfter 20 herkömmlicher Bauart, der mittels eines mit dem Verbrennungsmotor in Verbindung stehenden Riementriebs 22 in Drehung versetzt wird.

Findet - wie im vorliegenden Fall - ein aufgeladener Dieselmotor Verwendung, so ist eine zusätzliche Kühlung der mittels eines Turboladers komprimierten Ladeluft erforderlich. Hierzu umfasst die Kühlungsanordnung 10 einen luftgekühlten Ladeluftkühler 24, der mit der Ansaughutze 16 derart verbunden ist, dass sich aufgrund eines mittels der Luftfördereinrichtung 12 in der Ansaughutze 16 erzeugbaren Unterdrucks Δp ein durch den Ladeluftkühler 24 hindurchtretender Nebenkühlluftvolumenstrom 26 hervorrufen lässt.

Genauer gesagt ist der Ladeluftkühler 24 mit der Ansaughutze 16 über ein Anschlussstück 28 verbunden, wobei das Anschlussstück 28 entlang eines seitlichen Umfangsbereichs 30 der Ansaughutze 16 an einer Oberseite 32 in den mittels der Luftfördereinrichtung 12 erzeugbaren Kühlluftvolumenstrom 14 einmündet, sodass sich der Ladeluftkühler 24 baulich außerhalb des Verlaufs des Kühlluftvolumenstroms 14 in einer seitlich zur Ansaughutze 16 orientierten horizontalen Einbaulage oberhalb des Verbrennungsmotors befindet. Das Anschlussstück 28 weist hierbei einen an die Außenkontur des verwendeten Ladeluftkühlers 24 angepassten rahmenförmigen Befestigungsbereich 34 sowie einen sich in Richtung der Ansaughutze 16 verjüngenden Mündungsbereich 36 auf.

Das Anschlussstück 28 ist mittels einer luftdichten Steckverbindung 38 an der Ansaughutze 16 der Kühlungsanordnung 10 angebracht. Die luftdichte Steckverbindung 38 weist beispielsgemäß einen selbstabdichtenden Konussitz 40 auf. Um ein unbeabsichtigtes Lösen des Konussitzes 40 aufgrund fahrtbedingt auftretender Vibrationen des Kraftfahrzeugs zu verhindern, ist zusätzlich ein Sicherungsmittel in Gestalt einer Klemmschelle 42 vorgesehen.

Gemäß einer nicht dargestellten Variante der Kühlungsanordnung 10 ist das Anschlussstück 28 einstückiger Bestandteil der Ansaughutze 16. Ansaughutze 16 und Anschlussstück 28 sind in diesem Fall aus thermoplastischem Kunststoff im Spritzgussverfahren hergestellt.

Dem Ladeluftkühler 24 ist ansaugseitig eine weitere Luftfördereinrichtung 44 vorgeschaltet. Die weitere Luftfördereinrichtung 44 ist als elektrisch betriebener Axialstromlüfter 46 herkömmlicher Bauart ausgebildet. Da der elektrisch betriebene Axialstromlüfter 46 ausschließlich der Unterstützung der Erzeugung des Nebenkühlluftvolumenstroms 26 dient, ist der Einsatz eines vergleichsweise leistungsschwachen elektrischen Antriebs 48 möglich.

Der elektrische Antrieb 48 wird mittels einer elektronischen Ladelufttemperaturregelung 50 mit elektrischem Strom versorgt, wobei die elektronische Ladelufttemperaturregelung 50 eine Kontrolleinheit 52 aufweist, der die Ausgangssignale eines in einem Ladeluftvolumenstrom liegenden Temperatursensors 54 zur Ermittlung eines Istwerts Tᵢₛₜ der Ladelufttemperatur zugeführt werden. Die Kontrolleinheit 52 regelt auf Grundlage eines zwischen dem ermittelten Istwert Tᵢₛₜ und einem für die Ladelufttemperatur einzuhaltenden Sollwert Tₛₒₗₗ durchgeführten Vergleichs die Drehzahl des elektrisch betriebenen Axialstromlüfters 46 im Sinne der Minimierung des Vergleichsergebnisses ein.

Es sei angemerkt, dass das Vorhandensein der weiteren Luftfördereinrichtung 44 vorrangig solchen Anwendungen Rechnung trägt, in denen der aufgrund des Unterdrucks Δp erzeugte Nebenkühlluftvolumenstrom 26 im Hinblick auf einen erhöhten Kühlungsbedarfs der Ladeluft nicht ausreichend ist. In allen anderen Fällen ist die Verwendung der weiteren Luftfördereinrichtung 44 nicht zwingend erforderlich, sodass zur Kühlung sowohl des Motorwärmetauschers 18 wie auch des Ladeluftkühlers 24 das Vorhandensein der einzelnen Luftfördereinrichtung 12 genügt.

Wie sich der einzigen Figur ferner entnehmen lässt, ist die Kühlungsanordnung 10 in eingebautem Zustand in einem mittels einer schwenkbaren Motorhaube 56 verschließbaren Motorraum 58 des Kraftfahrzeugs untergebracht. Eine Vielzahl von in der Motorhaube 56 im Bereich des Motorwärmetauschers 18 bzw. des Ladeluftkühlers 24 vorgesehene Ausnehmungen 60 erlauben hierbei einen Eintritt von aus der Fahrzeugumgebung angesaugter Luft.

## Patentansprüche

1. Kühlungsanordnung für ein Kraftfahrzeug, insbesondere für einen landwirtschaftlichen Traktor, mit einer Luftfördereinrichtung (12) zur Erzeugung eines Kühlluftvolumenstroms (14) sowie einem der Luftfördereinrichtung (12) ansaugseitig mittels einer Ansaughutze (16) vorgeschalteten luftgekühlten Motorwärmetauscher (18), wobei ein luftgekühlter Ladeluftkühler (24) mit der Ansaughutze (16) derart verbunden ist, dass sich aufgrund eines mittels der Luftfördereinrichtung (12) in der Ansaughutze (16) erzeugbaren Unterdrucks (Δp) ein durch den Ladeluftkühler (24) hindurchtretender Nebenkühlluftvolumenstrom (26) hervorrufen lässt, **dadurch gekennzeichnet, dass** dem Ladeluftkühler (24) eine als elektrisch betriebener Axialstromlüfter (46) ausgebildete weitere Luftfördereinrichtung (44) vorgeschaltet ist, wobei eine Kontrolleinheit (52), der die Ausgangssignale eines in einem Ladeluftvolumenstrom liegenden Temperatursensors (54) zur Ermittlung eines Istwerts (Tᵢₛₜ) der Ladelufttemperatur zugeführt werden, auf Grundlage eines zwischen dem ermittelten Istwert (Tᵢₛₜ) und einem für die Ladelufttemperatur einzuhaltenden Sollwert (Tₛₒₗₗ) durchgeführten Vergleichs die Drehzahl des elektrisch betriebenen Axialstromlüfters (46) im Sinne der Minimierung des Vergleichsergebnisses einregelt.

2. Kühlungsanordnung nach Anspruch 1, **dadurch gekennzeichnet, dass** der Ladeluftkühler (24) mit der Ansaughutze (16) über ein Anschlussstück (28) verbunden ist, wobei das Anschlussstück (28) entlang eines seitlichen Umfangsbereichs (30) der Ansaughutze (16) in den mittels der Luftfördereinrichtung (12) erzeugbaren Kühlluftvolumenstrom (14) einmündet.

3. Kühlungsanordnung nach Anspruch 2, **dadurch gekennzeichnet, dass** das Anschlussstück (28) einstückiger Bestandteil der Ansaughutze (16) ist.

4. Kühlungsanordnung nach Anspruch 2, **dadurch gekennzeichnet, dass** das Anschlussstück (28) mittels einer luftdichten Steckverbindung (38) an der Ansaughutze (16) angebracht ist.

5. Kühlungsanordnung nach Anspruch 4, **dadurch gekennzeichnet, dass** die luftdichte Steckverbindung (38) einen selbstabdichtenden Konussitz (40) aufweist.

## Claims

1. Cooling assembly for a motor vehicle, in particular for an agricultural tractor, having an air feed device (12) for generating a cooling air volume flow (14) and an air-cooled engine heat exchanger (18) which is connected upstream of the air feed device (12) on the intake side by means of an intake vent (16), wherein an air-cooled charge air cooler (24) is connected to the intake vent (16) in such a way that the vacuum (Δp) which can be generated in the intake vent (16) by means of the air feed device (12) can bring about a secondary cooling air volume flow (26) which passes through the charge air cooler (24), **characterized in that** a further air feed device (44) which is embodied as an electrically operated axial flow fan (46) is connected upstream of the charge air cooler (24), wherein a monitoring unit (52), to which the output signals of a temperature sensor (54), which is located in a charge air volume flow and has the purpose of determining an actual value (T_{act}) of the charge air temperature, are fed, adjusts the rotational speed of the electrically operated axial flow fan (46) on the basis of a comparison carried out between the determined actual value (T_{act}) and a setpoint value (Tₛₑₜₚ) which is to be maintained for the charge air temperature, with the effect of minimizing the comparison result.

2. Cooling assembly according to Claim 1, **characterized in that** the charge air cooler (24) is connected to the intake vent (16) via a connecting element (28), wherein the connecting element (28) opens, along a lateral circumferential region (30) of the intake vent (16), into the cooling air volume flow (14) which can be generated by means of the air feed device (12).

3. Cooling assembly according to Claim 2, **characterized in that** the connecting element (28) is a single-piece component of the intake vent (16).

4. Cooling assembly according to Claim 2, **characterized in that** the connecting element (28) is attached to the intake vent (16) by means of an air-tight plug-type connection (38).

5. Cooling assembly according to Claim 4, **characterized in that** the air-tight plug-type connection (38) has a self-sealing conical seat (40).

## Revendications

1. Système de refroidissement pour un véhicule automobile, en particulier pour un tracteur agricole, comprenant un dispositif de refoulement d'air (12) pour générer un courant volumique d'air de refroidissement (14) et comprenant un échangeur de chaleur de moteur (18) refroidi par air monté en amont du dispositif de refoulement d'air (12) du côté de l'aspiration au moyen d'un capot d'aspiration (16), un refroidisseur d'air de suralimentation (24) refroidi par air étant connecté au capot d'aspiration (16) de telle sorte qu'un courant volumique d'air de refroidissement auxiliaire (26) traversant le refroidisseur d'air de suralimentation (24) puisse être généré sur la base d'une dépression (Δp) pouvant être produite au moyen du dispositif de refoulement d'air (12) dans le capot d'aspiration (16), **caractérisé en ce qu'**un dispositif de refoulement d'air supplémentaire (44) réalisé en tant que ventilateur à courant axial (46) à commande électrique est monté en amont du refroidisseur d'air de suralimentation (24), une unité de contrôle (52), à laquelle sont acheminés les signaux de sortie d'un capteur de température (54) situé dans un courant volumique d'air de suralimentation pour déterminer une valeur réelle (Tᵢₛₜ) de la température d'air de suralimentation, ajustant, sur la base d'une comparaison effectuée entre la valeur réelle déterminée (Tᵢₛₜ) et une valeur de consigne (Tₛₒₗₗ) à respecter pour la température d'air de suralimentation, la vitesse de rotation du ventilateur à courant axial (46) à commande électrique dans le sens d'une minimisation du résultat de la comparaison.

2. Système de refroidissement selon la revendication 1, **caractérisé en ce que** le refroidisseur d'air de suralimentation (24) est connecté au capot d'aspiration (16) par le biais d'un élément de raccordement (28), l'élément de raccordement (28) débouchant le long d'une région périphérique latérale (30) du capot d'aspiration (16) dans le courant volumique d'air de refroidissement (14) pouvant être produit au moyen du dispositif de refoulement d'air (12).

3. Système de refroidissement selon la revendication 2, **caractérisé en ce que** l'élément de raccordement (28) est un constituant d'une seule pièce du capot d'aspiration (16).

4. Système de refroidissement selon la revendication 2, **caractérisé en ce que** l'élément de raccordement (28) est monté sur le capot d'aspiration (16) au moyen d'une connexion enfichable étanche à l'air (38).

5. Système de refroidissement selon la revendication 4, **caractérisé en ce que** la connexion enfichable étanche à l'air (38) présente un siège conique auto-étanchéifiant (40).
